# EUROPÄISCHE PATENTANMELDUNG

(11) **EP 0 952 184 A1**
(43) Veröffentlichungstag der Anmeldung: **27.10.1999**
(21) Anmeldenummer: 99106393.4
(22) Anmeldetag: 27.03.1999
(51) Int. Cl.: C08K 5/3465, C08L 21/00

(54) **Kautschukmischung**

(30) Priorität: 25.04.1998 DE 19818564
(71) Anmelder: Continental Aktiengesellschaft, 30165 Hannover (DE)
(72) Erfinder: Teves, Reinhard, Dr., 30926 Seelze (DE); Meier, Heinrich, 31707 Heessen (DE); Quack, Ralf, Dr., 30916 Isernhagen (DE)

(57) **Zusammenfassung**

Die Erfindung bezieht sich auf eine Kautschukmischung, die zumindest eine Kautschukkomponente und Füll- und Zusatzstoffe, insbesondere Alterungsschutz- und Vulkanisationschemikalien enthält.

Um Gummiprodukte, insbesondere helle oder farbige, bereitzustellen, die eine hervorragende Alterungsbeständigkeit besitzen und gleichzeitig während ihrer gesamten Lebensdauer keine Verfärbungen aufweisen, die auf die Verwendung eines Alterungsschutzmittels zurückzuführen sind, wird vorgeschlagen, daß die Kautschukmischung als Alterungsschutzmittel eine Substanz aufweist, die 7,8 Dimethylisoalloxazin ist oder die 7,8 Dimethylisoalloxazin als Strukturbaustein enthält.

## Beschreibung

Die Erfindung betrifft eine Kautschukmischung, die zumindest eine Kautschukkomponente und Füll-und Zusatzstoffe, insbesondere Alterungsschutzmittel und Vulkanisationschemikalien enthält.

Um Kautschukmischungen für Gummiprodukte mit entsprechenden Eigenschaften bereitzustellen, müssen die einzelnen Mischungsbestandteile aufeinander abgestimmt sein. So enthält eine Kautschukmischung außer den Kautschukkkomponenten, wie z. B. Naturkautschuk, Polybutadienkautschuk oder Styren-Butadien-Copolymer-Kautschuk, Füll- und Zusatzstoffe, die z.B. zur Verbesserung der Verarbeitbarkeit der Kautschukmischung oder auch zur Eigenschaftsoptimierung des Vulkanisates dienen. So werden der Kautschukmischung Füllstoffe (z.B. Ruß, Kieselsäure, Kreide) zugesetzt, die der Verstärkung des Gummiproduktes dienen. Weiterhin werden in die Kautschukmischung als Zusatzstoffe Alterungsschutzmittel, Verarbeitungshilfsmittel, Weichmacher und Vulkanisationschemikalien - wie z.B. Schwefel bzw. Schwefelspender, Peroxide oder vulkanisationsbeeinflussende Stoffe (Beschleuniger oder Aktivatoren) - gemischt.

Hinsichtlich der Langlebigkeit (Erhaltung des Gebrauchswertes) von Gummiprodukten spielen die verwendeten Alterungsschutzmittel eine große Rolle. Die Wirkung der Alterungsschutzmittel beruht im wesentlichen darauf, daß sie unter Bildung stabiler Radikale in der Lage sind, Oxidationsprozesse in der Kautschukkette zu stoppen. In Abhängigkeit der verwendeten Mischungsbestandteile werden hierfür unterschiedliche Verbindungen auf der Basis von Aminen oder Phenolen eingesetzt. So ist eine Vielzahl von Alterungschutzmitteln auf den Markt, wobei häufig mehrere Alterungsschutzmittel in eine Kautschukmischung gleichzeitig eingemischt werden, um möglichst eine optimale Wirkung zu erzielen. Dennoch ergeben sich Schwierigkeiten, da entweder die Alterungsschutzmittel verfärbend (z.B. 6PPD - N-Phenyl-N'-(1,3-dimethylbutyl)-p-phenylendiamin) wirken oder einen unzureichenden Schutz geben. Insbesondere für helle oder farbige Gummiprodukte kommt nur die Verwendung von nicht verfärbenden Alterungsschutzmitteln (z. B. styrolisierte Phenole) in Frage, da Farbveränderungen dem Produkt häufig ein unschönes Aussehen geben, die für den Kunden begründeter Anlaß zur Reklamation sind. Allerdings besitzen nicht verfärbende Alterungsschutzmittel - wie bereits erwähnt - eine geringere Wirksamkeit, was einen vorzeitigen Defekt des Gummiproduktes zur Folge hat.

Die Aufgabe der hier vorliegenden Erfindung besteht darin, Gummiprodukte - insbesondere helle oder farbige - bereitzustellen, die eine hervorragende Alterungsbeständigkeit besitzen und gleichzeitig während ihrer gesamten Lebensdauer keine Verfärbungen aufweisen, die auf die Verwendung eines Alterungsschutzmittels zurückzuführen sind.

Erfindungsgemäß wird die Aufgabe dadurch gelöst, daß die Kautschukmischung als Alterungsschutzmittel eine Substanz aufweist, die 7,8-Dimethylisoalloxazin ist oder die 7,8-Dimethylisoalloxazin als Strukturbaustein enthält.

Überraschenderweise konnten durch die Verwendung einer solchen Substanz Gummiprodukte hergestellt werden, die eine ausgezeichnete Alterungsbeständigkeit aufweisen. Es kann nunmehr auf den Einsatz von verfärbenden Substanzen verzichtet werden, wodurch langlebige farbstabile Vulkanisate erzielt werden. Gleichzeitig kann eine andere Wirkung des 7,8-Dimethylisoalloxazin ausgenutzt werden, denn diese Substanz verleiht dem Vulkanisat eine kräftig gelbe Farbe, so daß auf weitere Farbstoffe verzichtet werden kann.

Als Alterungsschutzmittel kann die Substanz 7,8-Dimethylisoalloxazin (Flavin) eingesetzt werden, die folgende Struktur aufweist:

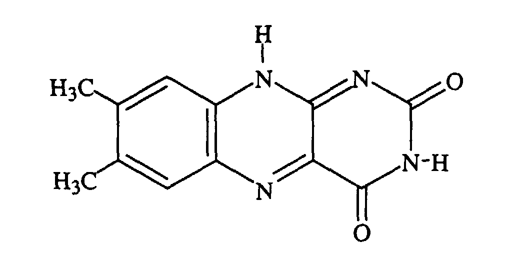

Es ist aber auch möglich Substanzen zu verwenden, die 7,8-Dimethylisoalloxazin als Strukturbaustein aufweisen, wobei z. B. folgende Strukturen denkbar wären: 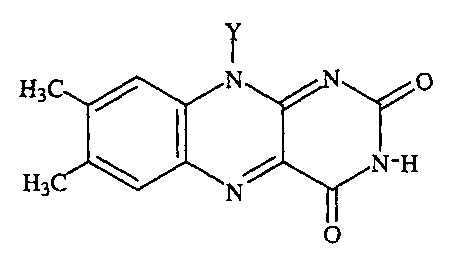
mit Y Alkylest verzweigt oder unverzweigt
mit bis zu 8 C-Atomen
oder 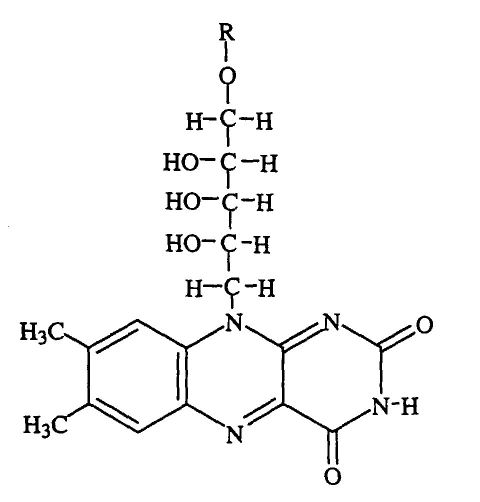
R: Alkylrest mit bis zu 4 C-Atomen

Besonders bevorzugt ist, wenn R=H, wobei dann die Substanz Riboflavin ist. Diese Substanz wird in der Medizin verwendet, so daß die Bereitstellung durch den Markt gewährleistet ist.

Es ist auch möglich, diese Substanz in Kombination mit anderen Alterungsschutzmitteln einzusetzen. Allerdings sollte darauf geachtet werden, wenn helle oder farbige Gummiprodukte hergestellt werden sollen und auf den Einsatz von verfärbenden Alterungsschutzmitteln nicht verzichtet werden soll, diese nur in geringen Konzentrationen zuzugeben. Vorzugsweise sollen aber nicht verfärbende Alterungsschutzmittel verwendet werden, wobei deren alterungsinhibierende Wirkung durch die Substanz verstärkt wird. Wiederum bevorzugt ist, wenn die Kautschukmischung als einziges Alterungsschutzmittel die Substanz enthält, da diese eine hervorragende Alterungsbeständigkeit bewirkt und gleichzeitig nicht verfärbend ist. Außerdem kann, wenn gewünscht, die eigene kräftige Farbwirkung des Alterungsschutzmittels ohne Zugabe von weiteren Stoffen ausgenutzt werden.

Bevorzugt ist, wenn die Substanz bezogen auf 100 Gewichtsteile der gesamten Kautschukkomponenten in einer Konzentration von 0,5 bis 5 phr in der Kautschukmischung enthalten ist. In diesem Konzentrationsbereich wurden die besten Ergebnisse hinsichtlich der Alterungsschutzwirkung erzielt.

Die erfindungsgemäße Kautschukmischung enthält vorzugsweise als Kautschukkomponente zumindest ein Polymer ausgewählt aus Naturkautschuk oder cis-Polyisopren mit einem cis-1,4-Anteil > 90 mol% oder Styrol-Butadien-Copolymer oder Polybutadien oder Mischungen hieraus.
Weiterhin kann die erfindungsgemäße Kautschukmischung ein oder mehrere aus dem Stand der Technik bekannte Kautschukkomponenten enthalten, z.B. folgende: Burylkautschuk (IIR), Chlorbutylkautschuk (CIIR), Brombutylkautschuk (BIIR), Acrylnitril-Butadien-Copolymer (NBR), hydriertes Acrylnitril-Butadien-Copolymer (HNBR), Ethylen-Propylen-Copolymer (EPM), Ethylen-Propylen-Dien-Terpolymer (EPDM), Chloroprenkautschuk (CR) oder p-Brommethylstyrol-isobutylkautschuk (z.B. *EXXPRO* der Fa. EXXON).

Um helle oder farbige Gummiprodukte bereitzustellen ist es erforderlich, daß die Kautschukmischung im wesentlichen nicht schwarze Füllstoffe enthält. So können das z.B. Kreide oder Aluminiumoxid sein. Vorteilhafterweise enthält die erfindungsgemäße Kautschukmischung Kieselsäure, die folgende Charakterisika aufweisen kann: eine BET-Oberfläche von 145 - 270 m²/g (ASTM D 5604), eine CTAB-Zahl von 120 - 285 m²/g (ASTM D 3765) und ein Porenvolumen von 0,7 - 1,7 ml/g (DIN 66133). Als Kieselsäure kann somit z.B. VN3 (Handelsname der Firma Degussa) zum Einsatz kommen. Zur Anbindung der Kieselsäure an das Polymersystem können weitere Zusatzstoffe (Aktivierungsmittel), z.B. Silane wie Bis-3-(triethoxysilylpropyl)tetrasulfid (TESPT) bzw. das entsprechende Disulfid, verwendet werden.

Weiterhin kann die Kautschukmischung als Zusatzstoff zumindest eine farbige Metallverbindung (z. B. Kobaltsalze) enthalten. Unter den Terminus "farbige Metallverbindung" sollen auch Stoffe fallen, die weiß sind, wie z. B. Titaniumdioxid (Rutil). Durch die Verwendung des 7,8-Dimethylisoalloxazins oder Substanzen, die 7,8-Dimethylisoalloxazin als Strukturbaustein enthalten, in Kombination mit einem solchen Salz können vielfältige Färbungen im Vulkanisat erreicht werden.

Sollen keine hellen Vulkanisate hergestellt werden, ist es natürlich auch möglich, daß in der Kautschukmischung als Füllstoff im wesentlichen Ruß verwendet wird. Die Ruße können folgende Charakteristika aufweisen: DBP-Zahl (ASTM D 2414) 90 bis 200 cm³/100 g, und CTAB-Zahl (ASTM D 3765) von 80 bis 170 m²/g. Auch kann in einem solchen Fall die Substanz in Kombination mit verfärbenden Alterungsschutzmitteln, wobei die Konzentration an diesen Alterungsschutzmitteln höher gehalten werden kann, verwendet werden.

Des weiteren enthält die erfindungsgemäße Kautschukmischung weitere übliche Zusatzstoffe wie Verarbeitungshilfsmittel (z. B. Stearinsäure, Wachse, Fette, Dispergatoren), Weichmacher (z.B. Phthalsäureester) und Vulkanisationschemikalien. Als solche können Schwefel bzw. Schwefelspender (z.B.: DTDM-Dimorpholyldisulfid) verwendet werden. Es ist aber auch möglich die Vulkanisation unter Zuhilfenahme anderer Vulkanisationschemikalien (z.B. Peroxide, Harze, Strahlung) ablaufen zu lassen. Außerdem werden vulkanisationsbeeinflussende Stoffe wie Beschleuniger oder Aktivatoren für die entsprechende Vulkanisationsart (z.B. für die Schwefelvulkanisation - z.B. CBS: Benzothiazyl-2-cyclohexylsulfenamid, TMTD: Tetramethylthiuramdisulfid, TBBS: Benzothiazyl-2-tert.-butylsulfenamid) der Kautschukmischung als Vulkanisationschemikalien zugesetzt.

Die erfindungsgemäßen Kautschukmischungen können für die Herstellung von Etiketten verwendet werden, die z.B. zur Kennzeichnung eines Produktes dienen. Dadurch wird eine langlebige optisch einwandfreie Kennzeichnung möglich.

Weiterhin kann die erfindungsgemäße Kautschukmischung für die Herstellung von Fahrzeugreifen Anwendung finden. So können beispielsweise Teile des Laufstreifens oder besonders bevorzugt die Seitenwände eines Reifens aus solch einer Kautschukmischung gefertigt werden. Aber auch für andere Produkte, wie z.B. Riemen, Fördergurte u.a. kann die erfindungsgemäße Kautschukmischung verwendet werden.

Anhand eines Ausführungsbeispiels soll die Erfindung näher erläutert werden:

**Tabelle 1**

| | ***Referenz- [phr]*** | ***Referenz [phr]*** | ***Erfindungsgemäße Mischungen [phr]*** |
|---|---|---|---|
| **Bestandteile** | **1** | **2** | **3** |
| Naturkautschuk | 40 | 40 | 40 |
| Buna VSL 5025-0* | 30 | 30 | 30 |
| Buna CB 10* | 30 | 30 | 30 |
| Riboflavin | - | - | 5 |
| Kieselsäure VN3** | 70 | 70 | 70 |
| Silan Si 69** | 6,25 | 6,25 | 6,25 |
| Mineralöl | 27 | 27 | 27 |
| Alterungsschutzmittel 6PPD | 2 | - | - |
| Zinkoxid | 3 | 3 | 3 |
| Stearinsäure | 1 | 1 | 1 |
| Titandioxid Rutil | 5 | 5 | 5 |
| Schwefel | 1,5 | 1,5 | 1,5 |
| Beschleuniger CBS | 1,5 | 1,5 | 1,5 |
| Beschleuniger DPG | 2 | 2 | 2 |

| | | | |
|---|---|---|---|
| **Fa. Bayer AG, Deutschland* | | | |
| ***Fa. Degussa AG, Deutschland* | | | |

Die Einheit phr bezieht sich auf 100 Teile des Gewichtes der gesamten Kautschukkomponenten.

Die Kautschukmischung wurde bei 170 °C 10 min vulkanisiert. Die entsprechenden physikalischen Daten nach der Vulkanisation sind in der Tabelle 2 wiedergegeben.

**Tabelle 2**

| | ***Referenz*** | ***Referenz*** | ***Erfindungsgemäße Mischungen*** |
|---|---|---|---|
| **Eigenschaften** | **1** | **2** | **3** |
| Reißfestigkeit [MPa] DIN 53504 | 12,4 | 12,3 | 12,6 |
| Bruchdehnung [%] DIN 53504 | 652 | 614 | 607 |
| Spannungswert 100 % [MPa] DIN 53504 | 1,85 | 2,03 | 2,17 |
| Spannungswert 300 % [MPa] DIN 53504 | 5,16 | 5,48 | 5,77 |
| Härte [Shore A] DIN 53505 | 62,4 | 64,5 | 65,2 |
| Rückprallelastizität [%] 23 °C DIN 53512 | 41,2 | 41,4 | 41,7 |

Die Alterungstests (Sauerstoff-Alterung) wurden nach DIN 53508 Punkt 7.2.2
**bei A**: 3 Tage bei 100 °C und
**bei B**: 14 Tage bei 70 °C
durchgeführt. Die Ergebnisse dieser Alterungstests sind in der Tabelle 3 zusammengefaßt.

**Tabelle 3**

| | ***Referenz 1*** | | ***Referenz 2*** | | ***Erfindungsgemäß 3*** | |
|---|---|---|---|---|---|---|
| **Alterungstest** | ***A*** | ***B*** | ***A*** | ***B*** | ***A*** | ***B*** |
| **Eigenschaften** | | | | | | |
| Reißfestigkeit [MPa] DIN 53504 | 11,8 | 12,8 | 10,6 | 12,5 | 11,2 | 13,3 |
| Bruchdehnung [%] DIN 53504 | 437 | 525 | 393 | 501 | 432 | 527 |
| Spannungswert 100 % [MPa] DIN 53504 | 3,1 | 2,62 | 3,21 | 2,75 | 3,1 | 2,8 |
| Spannungswert 300 % [MPa] DIN 53504 | 8,45 | 7,28 | 8,56 | 7,46 | 8,1 | 7,5 |
| Härte [Shore A] DIN 53505 | 70,4 | 68,2 | 71,5 | 69,3 | 71 | 69,6 |
| Rückprallelastizität [%] 23 °C DIN 53512 | 45,9 | 45,3 | 44 | 44,4 | 44 | 44 |

Aus den Tabellen 2 und 3 geht hervor, daß die erfindungsgemäße Mischung 3 sowohl vor als auch nach der Alterung in den physikalischen Werten auch einer Mischung 1 keinesfalls nachsteht. Die Mischung 1, die als Alterungsschutzmittel ein verfärbendes enthält, zeigt zwar ähnliche physikalische Kenndaten, jedoch traten im Laufe der Zeit Verfärbungen der Gummiproben auf. Die Mischung 2, die kein Alterungssschutzmittel enthält, weist eine schlechtere Alterungsbeständigkeit auf. Es können erfindungsgemäß Gummiprodukte bereitgestellt werden, die bei hervorragender Alterungsbeständigkeit keine Verfärbungen zeigen, so daß insbesondere helle oder farbige Vulkanisate ihr Aussehen über lange Zeit beibehalten.

## Patentansprüche

1. Kautschukmischung, die zumindest eine Kautschukkomponente und Füll- und Zusatzstoffe, insbesondere Alterungsschutzmittel und Vulkanisationschemikalien enthält, dadurch gekennzeichnet, daß sie als Alterungsschutzmittel eine Substanz aufweist, die 7,8-Dimethylisoalloxazin ist oder die 7,8-Dimethylisoalloxazin als Strukturbaustein enthält.

2. Kautschukmischung nach Anspruch 1, dadurch gekennzeichnet, daß die Substanz Riboflavin ist.

3. Kautschukmischung nach zumindest einem der vorhergehenden Ansprüche, dadurch gekennzeichnet, daß die Substanz, bezogen auf 100 Gewichtsteile der gesamten Kautschukkomponenten, in einer Konzentration von 0,5 bis 5 phr in der Kautschukmischung enthalten ist.

4. Kautschukmischung nach zumindest einem der vorhergehenden Ansprüche, dadurch gekennzeichnet, daß sie im wesentlichen nicht schwarze Füllstoffe, insbesondere Kieselsäure, enthält.

5. Kautschukmischung nach zumindest einem der vorhergehenden Ansprüche, dadurch gekennzeichnet, daß sie als Zusatzstoff zumindest eine farbige Metallverbindung enthält.

6. Verwendung der Kautschukmischung nach zumindest einem der vorhergehenden Ansprüche für die Herstellung von Etiketten.

7. Verwendung der Kautschukmischung nach zumindest einem der Ansprüche 1 bis 5 für die Herstellung von Fahrzeugreifen.
